(19) Europäisches Patentamt
European Patent Office
Office européen des brevets

(11) **EP 0 978 683 A1**

(12) **EUROPÄISCHE PATENTANMELDUNG**

(43) Veröffentlichungstag:
09.02.2000 Patentblatt 2000/06

(51) Int. Cl.⁷: **F21V 8/00**, F21V 5/02

(21) Anmeldenummer: **99115695.1**

(22) Anmeldetag: **09.08.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **07.08.1998 DE 19835922**

(71) Anmelder:
**Siteco Beleuchtungstechnik GmbH
83301 Traunreut (DE)**

(72) Erfinder: **Leibig, Joachim
83374 Traunwalchen (DE)**

(74) Vertreter:
**Goddar, Heinz J., Dr. et al
FORRESTER & BOEHMERT
Franz-Joseph-Strasse 38
80801 München (DE)**

(54) **OPtishe Anzeigevorrichtung**

(57)    Die Erfindung betrifft eine optische Anzeigevorrichtung mit einer Lichtquelle (1;20;56;61;72), deren abgestrahltes Licht in einer Lichtaustrittsfläche der Anzeigevorrichtung über ein optisch wirksames, vorzugsweise im wesentlichen scheibenförmig ausgebildetes Abstrahlelement (3;3';50;60;70) gerichtet austritt, wobei das Abstrahlelement als Lichtleiter (3;3';50;60;70) ausgebildet ist, wobei das von der Lichtquelle (1;20;56;61;72) abgegebene Licht in den Lichtleiter (3;3';50;60;70) von seiner Schmalseite her eingekoppelt wird und daß, Mittel zum Auskoppeln (4;10;14;31;40;42;54;64;76;78) des in dem Lichtleiter transportierten Lichtes durch die Lichtaustrittsfläche hindurch  mit einer Prismenstruktur (12;16;31;66;80;82) vorgesehen sind, wobei die Prismenstruktur (12;16;31;66;80;82) einen vorbestimmten Teil der Lichtaustrittsfläche festlegt, über den Licht aus dem Lichtleiter (3;3':50;60;70) ausgekoppelt wird.

Fig.1

**Beschreibung**

Die Erfindung bezieht sich auf eine optische Anzeigevorrichtung gemäß dem Oberbegriff des Patentanspruches 1.

Im vorliegenden Zusammenhang wird unter einer gattungsgemäßen optischen Anzeigevorrichtung jede Vorrichtung verstanden, die ein Betrachtungsfenster aufweist, in dem mittels einer in der Vorrichtung angeordneten, z. B. durch Unterbrechen der Stromzufuhr ein-/ausschaltbaren, gegebenenfalls steuer- oder regelbaren Lichtquelle ein für einen Betrachter visuell wahrnehmbares Informationsmuster erzeugt wird. Typische Beispiele für eine solche optische Anzeigevorrichtung sind z. B. Signalleuchten von Signalanlagen des Straßen-oder Schienenverkehrs. Anzeigevorrichtungen im obigen Sinne können aber auch beleuchtete Warn- oder Hinweisschilder sein, die beispielsweise zur Orientierung in Gebäuden eingesetzt werden.

Es sind genügend Beispiele für die geschilderten Anwendungsfälle aus der täglichen Anschauung bekannt, so daß es nicht erforderlich ist, für den konventionellen Aufbau derartiger optischer Anzeigevorrichtungen druckschriftlich Beispiele zu benennen. Einer konventionellen optischen Anzeigevorrichtung liegt etwa folgendes Aufbauprinzip zugrunde. In einem Gehäuse der optischen Anzeigevorrichtung ist eine Lichtquelle untergebracht, für die häufig eine Glühlampe verwendet wird. In einer vor der Lichtquelle angeordneten Lichtaustrittsfläche der Anzeigevorrichtung ist ein optisch wirksames, mehr oder minder scheibenförmiges Abstrahlelement untergebracht, über das die visuell wahrzunehmende Information abgestrahlt wird. Dabei soll unter dem Begriff „optisch wirksam" die Summe der Eigenschaften zusammengefaßt werden, die das Abstrahlelement je nach Anwendung besitzt. Bei konventionellen optischen Anzeigevorrichtungen besteht es aus einem transluzenten Werkstoff, wie zum Beispiel Preßglas oder PMMA. Es kann eingefärbt sein, falls die Signalinformation eine definierte Farbe ist, und/oder ein eingeätztes, aufgeklebtes Muster tragen, das dann gegebenenfalls in Kombination mit der Farbe als Signal- oder Zeicheninformation visuell sichtbar gemacht wird. In vielen Fällen weist eine der beiden Oberflächen des Abstrahlelementes eine geometrische Struktur auf, um das von der hinter ihm angeordneten Lichtquelle abgegebene Licht möglichst gleichmäßig zu verteilen, daß mit anderen Worten eine möglichst hohe gleichmäßige Leuchtdichte sowie ein hoher Betriebswirkungsgrad der Anzeigevorrichtung bei einer zugleich definierten, vom Anwendungsfall abhängigen Lichtverteilungscharakteristik erzielt wird.

In vielen Anwendungsfällen für derartige optische Anzeigevorrichtungen ist eine hohe Betriebssicherheit erforderlich, zugleich aber ist die konventionell als Lichtquelle benutzte Glühlampe wegen einer individuellen, begrenzten Lampenlebensdauer doch relativ wartungsintensiv. Es hat daher nicht an Versuchen gefehlt, anstelle der Glühlampen und ähnlicher Leuchtmittel andere Lichtquellen einzusetzen.

Aus US-A-5 457 450 ist beispielsweise bekannt, bei einer Signalleuchte einer Verkehrssignalanlage als Lichtquelle anstelle einer konventionellen Glühlampe eine Vielzahl von Leuchtdioden einzusetzen, die in einem zweidimensionalen Raster auf einer Leiterplatte in Strahlrichtung vor dem Abstrahlelement angeordnet sind. In dieser Druckschrift ist insbesondere das Problem dargelegt, daß die LichtstromlBetriebsspannungs-Charakteristik bei Leuchtdioden wesentlich kritischer ist als bei Glühlampen. Fällt die momentane Betriebsspannung beispielsweise nur um wenige Prozent unter die Nennspannung, dann fällt der von der Glühlampe abgegebene Lichtstrom zunächst nur geringfügig ab. Anders ist dies bei der Leuchtdiode, die auf Unterspannungen unmittelbar mit einem signifikanten Abfall des abgegebenen Lichtstromes reagiert. Dieses Problem wird bei der bekannten Lösung durch eine entsprechende Verdrahtung der Leuchtdiodematrix gelöst, die es ermöglicht, bei einer im wesentlichen seriellen Verdrahtung von Leuchtdiodengruppen im Falle einer festgestellten Unterspannung einzelne Leuchtdioden abzuschalten, so daß die weiter aktivierbaren Leuchtdioden jeweils mit Nennspannung betrieben werden.

Aus DD-B-118 334 ist ferner ein Lichtsignalgeber für Verkehrssignalanlagen bekannt, bei dem zur Darstellung der Farben Gelb, Grün, Rot oder Kombinationen davon sowie zur farblichen Darstellung von Symbolen als Lichtquelle eine Vielzahl von Leuchtdioden in flächenhafter Anordnung und beliebiger geometrischer Begrenzung eingesetzt sind. Farbbildtiberlappungen werden dabei durch Ineinanderschachteln von Leuchtdioden mit unterschiedlicher Lichtfarbe bei gleichzeitiger oder zusätzlicher geometrischer Begrenzung dargestellt. Auch bei dieser bekannten Lösung wird das bekannte Aufbauprinzip für optische Anzeigevorrichtungen eingesetzt, bei dem die Lichtquelle aufder der Lichtaustrittsöffnung des Abstrahlelementes abgewandten Seite angeordnet ist. Werden Leuchtdioden als Lichtquelle eingesetzt, so sind diese danach mit Abstand zum Abstrahlelement in Form einer Matrix und in einer zum Abstrahlelement parallelen Ebene angeordnet.

Gemeinsam ist allen diesen bekannten Lösungen, daß das von einer Lichtquelle abgestrahlte Licht von der Rückseite her in das Abstrahlelement eintritt, entsprechend seiner Leuchtstoffeigenschaften und gegebenenfalls auch geometrischen Struktur umgelenkt wird und auf der Lichtaustrittsseite wieder austritt. Bekanntlich muß für diese Lichtlenkung, abhängig vom Anwendungsfall, ein mehr oder minder großer Aufwand betrieben werden, um die gewünschte Lichtverteilungscharakteristik der optischen Anzeigevorrichtung zu erreichen. Vielfach muß dabei auch in Kauf genommen werden, daß sich nur ein unbefriedigender Betriebswirkungsgrad erzielen läßt.

Der Erfindung liegt die Aufgabe zugrunde, eine optische Anzeigevorrichtung der eingangs genannten Art zu schaffen, mit der sich mit einfachen Mitteln eine hohe Gleichmäßigkeit der Leuchtdichte in der Lichtaustrittsfläche der optischen Anzeigevorrichtung sowie eine definierte Lichtausstrahlung bei einem günstigen Verhältnis des ausgestrahlten Lichtstromes zu der dafür eingesetzten Energie erzielen läßt.

Diese Aufgabe wird gelöst durch eine optische Anzeigevorrichtung mit einer Lichtquelle, deren abgestrahltes Licht in einer Fläche der Anzeigevorrichtung über ein darin angeordnetes, optisch wirksames, im wesentlichen scheibenförmig ausgebildetes Abstrahlelement gerichtet austritt, welche dadurch gekennzeichnet ist, daß das Abstrahlelement als Lichtleiter, insbesondere als Lichtleiterplatte, ausgebildet ist, wobei das von der Lichtquelle abgegebene Licht in den Lichtleiter, z. B. in radialer Richtung, von seiner schmalseitigen Stirnfläche her eingestrahlt wird, wobei insbesondere auch Reflektoren oder reflektierende Abschnitte, Prismen und dgl. vorgesehen sein können, um Licht in die Lichtleiterplatte einzukoppeln, und daß an dem Lichtleiter, i. d. R. parallel zu einer Licht abstrahlenden Oberfläche ausgerichtet, Mittel zum Auskoppeln des in der Lichtleiterplatte transportierten Lichtes durch die besagte Fläche hindurch vorgesehen sind. Die Fläche oder Flächen der Anzeigevorrichtung, auf der von der Lichtquelle abgestrahltes Licht austritt, wird nachfolgend „Lichtaustrittsfläche" genannt, wobei das Licht auf der gesamten Lichtaustrittsfläche oder nur auf einem Teil davon austreten kann, wobei in letzterem Fall ein Teil der Lichtaustrittsfläche dunkel bleibt.

Vorzugsweise weisen die Mittel zum Auskoppeln des Lichts eine Prismenstruktur auf, z. B. in der Form einer aufdie Lichtaustrittsfläche aufgebrachten Mikroprismenfolie oder einer formstabilen Kunststoffplatte mit einer Mikroprismenstruktur oder in der Form einer prismenartigen Strukturierung einer Grenzfläche der Lichtleiterplatte, etwa derjenigen, welche der Lichtaustrittsfläche gegenüber liegt.

Erfindungsgemäß können die Mittel zum Auskoppeln, also insbesondere die Prismenstruktur, derart angeordnet sein, daß eine selektive Auskopplung aufeinem Teil der Lichtaustrittsfläche entsprechend einem vorgegebenen Muster, z. B. einem Symbol, bewirkt wird.

Der Lichtleiter kann grundsätzlich jede beliebige Form haben und insbesondere rund, rechteckig oder quadratisch sein. Bei einer Mehreckform kann vorgesehen sein, daß Licht, z. B. von stabförmigen Leuchtstofflampen, von einer, zwei, drei oder mehr Seiten eingekoppelt wird. Wenn Licht nur über einen Teil des Umfangs der Lichtleiterplatte seitlich eingestrahlt wird, ist vorzugsweise der restliche Teil der Schmalseite entlang des Umfangs nach innen verspiegelt.

Im Gegensatz zu den bekannten, eingangs gewürdigten Lösungen für optische Anzeigevorrichtungen wird erfindungsgemäß das von der Lichtquelle abgestrahlte Licht von der Seite her in das Abstrahlelement eingekoppelt, das zu diesem Zweck als Lichtleiter ausgebildet ist und das eingekoppelte Licht bevorzugt durch interne Totalreflexion in der Platte weiterleitet. Wird bei einem auf eine Grenzfläche einfallenden Lichtstrahl der Grenzwinkel der Totalreflexion (bezogen auf eine Normale zur Grenzfläche) unterschritten, so werden die entsprechenden Lichtstrahlen aufder Lichtaustrittsseite des Abstrahlelementes ausgekoppelt.

Gemäß einer der Weiterbildungen der Erfindung können Mittel zum Auskoppeln des in der Lichtleiterplatte transportierten Lichtes durch eine geometrische Struktur von prismatischen Reflektorelementen gebildet sein, die in der von der Lichtaustrittsfläche der Lichtleiterplatte abgekehrten Oberfläche vorgesehen sind.

Eine besonders vorteilhafte Weiterbildung der Erfindung besteht darin, diese Mittel zum Auskoppeln des in der Lichtleiterplatte transportierten Lichtes in Form einer auf der Lichtaustrittsseite auf die Lichtleiterplatte aufgebrachten Folie oder Plane mit einer Mikroprismenstruktur auszubilden. Eine derartige Folie, die je nach Ausgestaltung der Mikroprismenstruktur unterschiedliche definierte Lichtverteilungscharakteristiken ermöglicht, ist an sich aus US-A-5 396 350 bekannt. Wie darin beschrieben ist, wurde die dort im einzelnen beschriebene Folie mit einem Raster von Mikroprismen für die Hintergrundbeleuchtung von Displays entwickelt. Untersuchungen haben aber ergeben, daß ein solches Licht auskoppelndes Element auch im Falle von optischen Anzeigevorrichtungen vorteilhaft einsetzbar ist, wobei sich auch Lichtquellen einsetzen lassen, die bei langer Lebensdauer betriebssicher sind und eine wesentlich günstigere Energiebilanz aufweisen als die konventionell als Lichtquelle benutzte Glühlampe. Mit der erfindungsgemäßen Lösung ist somit eine Möglichkeit gegeben, eine gezielte Lichtausstrahlung in bestimmte Raumwinkel auf einfache Weise sicherzustellen, dies mit einer sehr flachen Bauform zu realisieren und dabei eine im Hinblick auf Energieverbrauch und Wartungsaufwand kostengünstige Lösung anzubieten.

Insbesondere stellt die Erfindung eine optische Anzeigevorrichtung mit einer Lichtquelle zur Verfügung, deren abgestrahltes Licht in einer Lichtaustrittsfläche der Anzeigevorrichtung über ein darin angeordnetes optisch wirksames, vorzugsweise im wesentlichen scheibenförmig ausgebildetes Abstrahlelement gerichtet austritt, wobei das Abstrahlelement als Lichtleiter, insbesondere als eine Lichtleiterplatte, ausgebildet ist, wobei das von der Lichtquelle abgegebene Licht in den Lichtleiter von einer Schmalseite, z. B. einer schmalseitigen Stirnfläche, her eingekoppelt wird und wobei Mittel zum Auskoppeln des in dem Lichtleiter transportierten Lichtes durch die Lichtaustrittsfläche hindurch mit einer Prismenstruktur vorgesehen sind, wobei die Prismenstruktur einen vorbestimmten Teil der Lichtaustrittsfläche festlegt, über den Licht gerichtet aus dem Lichtleiter ausgekoppelt wird. Die Mittel zum Auskoppeln von Licht können insbesondere parallel zu der lichtabstrahlenden Oberfläche des Lichtleiters ausgerichtet sein.

Der Bereich der Prismenstruktur legt erfindungsgemäß einen vorbestimmten Teil der Lichtaustrittsfläche fest, aufdem Licht aus dem Lichtleiter gerichtet ausgekoppelt wird, während in den angrenzenden Bereichen kein Licht gerichtet ausgekoppelt wird. Diese angrenzenden Bereiche heben sich zumindest für bestimmte Blickrichtungen durch einen Kontrast ab. Der besagte vorbestimmte Teil der Lichtaustrittsfläche entspricht einem vorgegebenen Muster, beispielsweise einem Symbol, wie einem Pfeil, einem Kreuz oder dgl., das angezeigt werden soll. Die angrenzenden Bereiche erscheinen in der Regel dunkler. Außerhalb des Bereichs der Prismenstrukturen kann ggf. Licht in anderen Bereichen der Lichtaustrittsfläche ungerichtet ausgekoppelt werden. Das Licht kann insbesondere aus dem Lichtleiter überwiegend in dem durch die Prismenstruktur festgelegten Teil der Lichtaustrittsfläche ausgekoppelt werden, während aus den anderen Bereichen der Lichtaustrittsfläche kein oder nur wenig Licht ausgekoppelt wird. Die Prismen beschränken selektiv die Richtungen, in denen Licht aus dem Lichtleiter ausgekoppelt wird, so daß das Licht entsprechend dem von ihnen bestimmten Muster in einen festgelegten Raumbereich oder festgelegte Raumbereiche abgestrahlt wird, in denen das Muster von einem Betrachter wahrgenommen wird. Die erfindungsgemäß verwendete Prismenstruktur hat also nicht nur eine Licht auskoppelnde, sondern auch eine Licht lenkende Funktion, da sie Licht nur in einen bestimmten Winkelbereich, bezogen aufeine Fläche senkrecht zu der Lichtaustrittsfläche, abgibt. Mit anderen Worten legt die erfindungsgemäße Prismenstruktur nicht nur den Bereich auf der Lichtaustrittsseite fest, den ein Betrachter als aufgehellt wahrnimmt, sondern auch die Richtung und den Raumbereich, in dem dieser aufgeheilte Bereich wahrgenommen werden kann. Dies unterscheidet die Erfindung auch von konventionellen Mitteln zur Lichtauskopplung, z. B. durch aufgerauhte oder lichtstreuende Bereiche, welche nur eine ungerichtete Lichtauskopplung ermöglichen.

Der Lichtleiter kann ein Vollichtleiter, z. B. eine Lichtleiterplatte, oder ein Hohllichtleiter, sein.

Gemäß einer Ausführungsform der Erfindung umfassen die Mittel zum Auskoppeln des Lichtes eine geometrische Struktur von prismatischen reflektierenden Elementen, die in einer von seiner Lichtaustrittafläche abgekehrten Oberfläche, insbesondere in einer der Lichtaustrittsfläche gegenüberliegenden Fläche, des Lichtleiters vorgesehen sind, oderbestehen aus solchen Elementen.

Die Erfindung kann auch vorsehen, daß die Mittel zum Auskoppeln des Lichtes eine auf der Seite der Lichtaustrittsfläche des Lichtleiters ausgebildete Prismenstruktur umfassen.

Die Prismenstruktur kann in einer Folie ausgebildet sein, die auf eine Lichtleiterplatte oder allgemeiner auf eine lichtdurchlässige Kunststoffplatte aufgebracht ist. Statt einer Folie kann auch eine formstabile Kunststoffplatte mit einer darin eingebrachten Prismenstruktur verwendet werden. Die Prismenstruktur kann auch in der Oberfläche der Lichtleiterplatte oder einer durchsichtigen Platte ausgebildet sein, welche den Hohlraum eines Hohllichtleiters begrenzt.

Insbesondere kann vorgesehen sein, daß die dem Lichtleiter, insbesondere einem Vollichtleiter, wie einer Leiterplatte, zugeordneten Mittel zum Auskoppeln des in diesem transportierten Lichtes als eine aufdie Lichtaustrittsfläche des Lichtleiters aufgebrachte formstabile Kunststoffplatte mit einer Mikroprismenstruktur und mit einer durch diese Mikroprismenstruktur vorgegebenen Lichtausstrahlungscharakterstik ausgebildet sind.

Gemäß einer weiteren Ausführungsform der Erfindung ist an einer Schmalseite des Lichtleiters ein Umlenkprisma mit einer dem Lichtleiter zugewandten Lichtabgefläche und einer Lichteintrittsfläche vorgesehen und die Lichtquelle, z.B. eine Lampe, so angeordnet, daß von ihr abgestrahltes Licht auf die Lichteintrittsfläche des Prismas fällt, wobei das Prisma das auf seine Lichteintrittsfläche einfallende Licht der Lichtquelle zu der Lichtabgabefläche hin umlenkt und damit in den Lichtleiter einkoppelt. Statt einem Umlenkrprisma kann eine andere Umlenkeinrichtung, z.B. ein Spiegel, vorgesehen sein.

Der Lichtleiter, insbesondere eine Lichtleiterplatte im Falle eines Vollichtleiters, kann in Form einer Kreisscheibe ausgebildet sein. Dabei ist die Lichtquelle diesem kreisscheibenförmigen Lichtleiter vorzugsweise in einer kreisringförmigen Anordnung zugeordnet. Es kann allerdings auch vorgesehen sein, daß die Lichtquelle nur selektiv am Umfang des Lichtleiters Licht einkoppelt, beispielsweise in zueinander beabstandeten Umfangsbereichen. In diesem Fall sind die restlichen Umfangsbereiche des Lichtleiters vorzugsweise so ausgebildet, daß sie in dem Lichtleiter laufendes Licht in den Lichtleiter zurückreflektieren. Die Erfindung kann dabei gemäß einer Ausführungsform vorsehen, daß die Lichtquelle als Ringlampe ausgebildet ist. Insbesondere können die bekannten toroidförmigen Ringlampen verwendet werden.

Insbesondere kann die Ringlampe koaxial und mit einem vorgegebenen Abstand zu dem Lichtleiter auf dessen der Lichtaustrittsfläche abgekehrten Seite angeordnet sein, wobei die Vorrichtung einen um den Lichtleiter gelegten Prismenring, der im Falle eines kreisscheibenförmigen Lichtleiters vorzugsweise konzentrisch ist und im allgemeineren Fall konform zu dessen Umfang ist und insbesondere unmittelbar an der Schmalseite des Lichtleiters anliegen kann, zum Einkoppeln des von der Ringlampe abgegebenen Lichts in den Lichtleiter aufweist.

Weiterhin kann vorgesehen sein, daß die Ringlampe bei einem gegenüber dem Außendurchmesser des Lichtleiters größeren Innendurchmesser konzentrisch zu dem Lichtleiter und dessen schmalseitiger Umfangsfläche zugekehrt angeordnet ist.

Die Erfindung kann auch vorsehen, daß der Lampe, auf der von der Lichtleiterplatte abgekehrten Seite angeordnet, ein rinnenförmiger Reflektor zugeordnet ist, der im Falle einer Ringlampe konzentrisch zu deren Mittelachse angeordnet ist.

Gemäß einer besonderen Ausführungsform besteht die Lichtquelle aus einer Mehrzahl von Leuchtdioden, die vorzugsweise entlang dem gesamten Umfang des Lichtleiters vorgesehen sind und jeweils einer schmalseitigen Umfangsfläche zugekehrt angeordnet sind.

Die Erfindung kann insbesondere bei einem kreisförmigen Lichtleiter vorsehen, daß die Lichtquelle aus einer Mehrzahl von Leuchtdioden in einer kreisringförmigen Anordnung gebildet ist, die konzentrisch zu dem Lichtleiter, z. B. einer Lichtleiterplatte, dessen schmalseitiger Umfangsfläche zugekehrt angeordnet ist.

Die Erfindung kann auch vorsehen, daß die Anordnung von Leuchtdioden in einer vorzugsweise regelmäßigen Aufeinanderfolge aus Leuchtdioden unterschiedlichen Typs mit jeweils charakteristischer Lichtfarbe besteht, wobei die Leuchtdioden jedes Typs individuell aktivierbar sind.

Die Anordnung von Leuchtdioden kann aus einer gegurteten Kette von Einzelelementen bestehen.

Gemäß einer Ausführungsform der Erfindung ist vorgesehen, daß ein um die schmalseitige Umfangsfläche des Lichtleiters bzw. der Lichtleiterplatte herum gelegter Haltering vorgesehen ist, der in regelmäßiger Winkelteilung eine Mehrzahl von radial ausgerichteten Durchgangsbohrungen zur Aufnahme jeweils einer der Leuchtdioden besitzt.

Dabei kann vorgesehen sein, daß der Aufnahmering für die Leuchtdioden einen Teil von Mitteln zum Einkoppeln des von der Leuchtdiodenanordnung ausgestrahlten Lichtes derart bildet, daß seine der schmalseitigen Umfangsfläche des Lichtleiters bzw. der Lichtleiterplatte zugekehrte Innenfläche reflektierend ausgebildet ist.

Gemäß einer Variante dieser Ausführungsform ist vorgesehen, daß in die schmalseitige Umfangsfläche einer Lichtleiterplatte oder einer Licht einkoppelnden Wand eines Hohllichtleiters Sacklochbohrungen zum Aufnehmen jeweils einer der Leuchtdioden, genauer zum Aufnehmen von deren Licht abstrahlender Fläche, eingelassen ist.

Erfindungsgemäß kann vorgesehen sein, daß die Lichtleiterplatte ein visuell wahrnehmbares Kontrastmuster trägt.

Insbesondere kann auf der Lichtaustrittsfläche eine Beschichtung, eine Folie oder dgl. vorgesehen sein, die in verschiedenen Bereichen unterschiedliche Transmissionseigenschaften hat und z. B. nur selektiv in bestimmten Bereichen Licht durchläßt oder in verschiedenen Bereichen verschieden gefärbt ist oder dgl. Ein optisches Element mit entsprechenden Eigenschaften kann, bezogen auf den Strahlengang des aus der Anzeigevorrichtung austretenden Lichts, der Lichtaustrittsfläche nachgeschaltet sein oder, insbesondere im Falle eines Hohllichtleiters, dieser vorgeschaltet sein. Wenn die Prismenstruktur die Geometrie eines vorbestimmten Teil der Lichtaustrittsfläche festlegt, aufdem Licht ausgekoppelt wird, kann aufdiese Weise der Bereich, auf dem Licht ausgekoppelt wird, optisch weiter gestaltet werden, z. B. dadurch, daß in diesem (von der Prismenstruktur festgelegten) Bereich zusätzliche Kontraste erzeugt werden oder daß dieser Bereich oder Teile dieses Bereiches auf eine bestimmte Art gefärbt erscheinen.

Erfindungsgemäß kann auch vorgesehen sein, daß der Lichtleiter zumindest zwei, vorzugsweise einander gegenüberliegende, Lichtaustrittsflächen aufweist, diejeweils mit einer Prismenstruktur zum Auskoppeln des Lichts aus dem Lichtleiter versehen sind.

Insbesondere kann auch vorgesehen sein, daß der Lichtleiter ein Hohllichtleiter ist und in dem Bereich zwischen den Lichtaustrittsflächen in dem Hohlraum des Hohllichtleiters ein Reflektor mit zwei einander gegenüberliegenden Seiten angeordnet ist, wobei die eine dieser Seiten auf sie einfallendes Licht zu einer der beiden Lichtaustrittsflächen reflektiert und die andere der reflektierenden Seiten des Reflektors das auf sie einfallende Licht zu der anderen Lichtaustrittsfläche reflektiert.

Erfindungsgemäß bewirken die Prismen nicht nur eine Lichtauskopplung, sondern auch die Ausrichtung des ausgekoppelten Lichts in eine bestimmte Vorzugsrichtung und eine Abschirmung ab einem bestimmten Winkel zu dieser Vorzugsrichtung. Durch geeignete Wahl der Vorzugsrichtung, z. B. durch eine bestimmte Form (symmetrisch/asymmetrisch) oder Ausrichtung bezüglich der Lichtaustrittsfläche, z. B. mit einer Grundfläche parallel oder geneigt zu der Lichtaustrittsfläche, sowie eines zugehörigen Abschirmwinkels, der insbesondere durch eine geeignete Querschnittsform und eine geeignete Wahl des Prismenwinkeis bestimmt ist, ist es möglich, eine Information der Anzeigevorrichtung nur in einen bestimmten Raumbereich um die Vorzugsrichtung zu senden, während diese Information für einen Betrachter, der aus einer anderen Richtung auf die Vorrichtung schaut, nicht sichtbar ist.

Die Erfindung kann auch vorsehen, daß die Prismenstruktur an einer Lichtaustrittsfläche eine erste Gruppe von Prismen umfaßt, welche Licht in einen ersten Raumbereich, der in der Regel durch eine Vorzugsrichtung und einen bestimmten Winkelbereich um diese Vorzugsrichtung bestimmt ist, auskoppelt, und eine zweite Gruppe von Prismen aufweist, welche Licht in einen zweiten Raumbereich auskoppelt, der von dem ersten Raumbereich verschieden ist.

Insbesondere kann auch vorgesehen sein, daß das visuelle Muster, das ein Betrachter auf einer Lichtaustrittsfläche wahrnimmt, für verschiedene Richtungen, in denen der Betrachter auf die Anzeigevorrichtung schaut, verschieden ist und somit in verschiedene Richtungen verschiedene Informationen abgegeben werden können.

Wenn der Lichtleiter ein Hohllichtleiter ist, kann vorgesehen sein, daß ein einer Lichtaustrittsfläche gegenüberliegender Dachreflektor so ausgebildet ist, daß sich der Abstand zwischen der Dachfläche und der zugehörigen Lichtaustrittsfläche des Hohlraums, ausgehend von einer Seite, an der Licht in den Hohlraum eingekoppelt wird, verringert. Im Falle einer Lichteinkopplung auf zwei einander gegenüberliegenden Seiten kann vorgesehen sein, daß der Dachreflektor eine nach innen vertiefte Form hat, d. h. daß der besagte Abstand sich zunächst, ausgehend von einer Schmalseite verringert und sich danach, z. B. ab der Mitte des Hohlraums, zu der gegenüberliegenden Schmalseite hin wieder vergrößert.

Im Falle einer einseitigen Lichteinkopplung kann vorgesehen sein, daß sich der besagte Abstand in der Richtung weg von der Lichteinkoppelseite kontinuierlich verringert, wobei der Dachreflektor in einem spitzen Winkel an die Seite anschließen kann, aufder Licht aus dem Hohllichtleiter ausgekoppelt wird.

Andere Weiterbildungen und Vorteile der Erfindung ergeben sich aus der detaillierten Beschreibung von Ausführungsbeispielen.

Ausführungsbeispiele der Erfindung werden im folgenden anhand der Zeichnungen näher beschrieben. Dabei zeigt

| | |
|---|---|
| Figur 1 | schematisch eine optische Anzeigevorrichtung in einer teilweise geschnitten ausgeführten dreidimensionalen Darstellung, |
| Figur 2 | die optische Anzeigevorrichtung gemäß Figur 1 im Querschnitt, wobei ein Abstrahlelement der Anzeigevorrichtung als scheibenförmige Lichtleiterplatte ausgebildet ist, der als Lichtquelle koaxial zu ihrem Umfang eine Ringlampe zugeordnet ist und auf deren Lichtaustrittsseite eine Folie mit Mikroprismenstruktur aufgebracht ist, |
| Figur 3 | eine Alternative zu der in der Figur 2 dargestellten optischen Anzeigevorrichtung, bei der die Lichtleiterplatte auf ihrer der Lichtaustrittsseite abgewandten Oberfläche eine aus prismatischen Reflektorelementen gebildete geometrische Struktur aufweist, |
| Figur 4 | schematisch eine Alternative zur Ausführungsform gemäß Figur 1, bei der anstelle einer Ringlampe ein Kranz von Leuchtdioden aufder Umfangsfläche des Abstrahlelementes der optischen Anzeigevorrichtung angeordnet ist, |
| Figur 5 | eine schematische Querschnittsdarstellung der optischen Anzeigevorrichtung gemäß Figur 4, |
| Figur 6 und Figur 7 | jeweils ein konstruktives Detail für die Anordnung von Leuchtdioden auf der Umfangsfläche des Abstrahlelementes bei einer Anzeigevorrichtung gemäß Figur 4 bzw. 5, |
| Figur 8 | eine Alternative zur geometrischen Anordnung der als Lichtquelle eingesetzten Leuchtdioden und |
| Figur 9 | ein Beispiel für eine optische Anzeigevorrichtung, die gemäß einer der vorstehend beschriebenen Alternativen ausgebildet ist und bei der in ihrer Lichtaustrittsfläche ein visuell wahrnehmbares Kontrastmuster vorgesehen ist. |
| Figur 10 | eine Ausführungsform einer erfindungsgemäßen Anzeigevorrichtung mit einer zweiseitigen Informationsdarstellung, |
| Figur 11 | eine Ausführungsform einer erfindungsgemäßen Anzeigevorrichtung mit einem Hohllichtleiter, |
| Figur 12 | eine Prismenplatte, die gemäß einer Ausführungsform bei der erfindungsgemäßen Anzeigevorrichtung verwendet werden kann, |
| Figur 13 | eine Struktur von zwei Prismenplatten, die bei der erfindungsgemäßen Anzeigevorrichtung verwendet werden kann, |
| Figur 14 | eine weitere Ausführungsform einer erfindungsgemäßen Anzeigevorrichtung mit einem Hohllichtleiter, |
| Figur 15 | eine Ausführungsform einer erfindungsgemäßen Anzeigevorrichtung mit einem Hohllichtleiter und zweiseitiger Informationsdarstellung. |

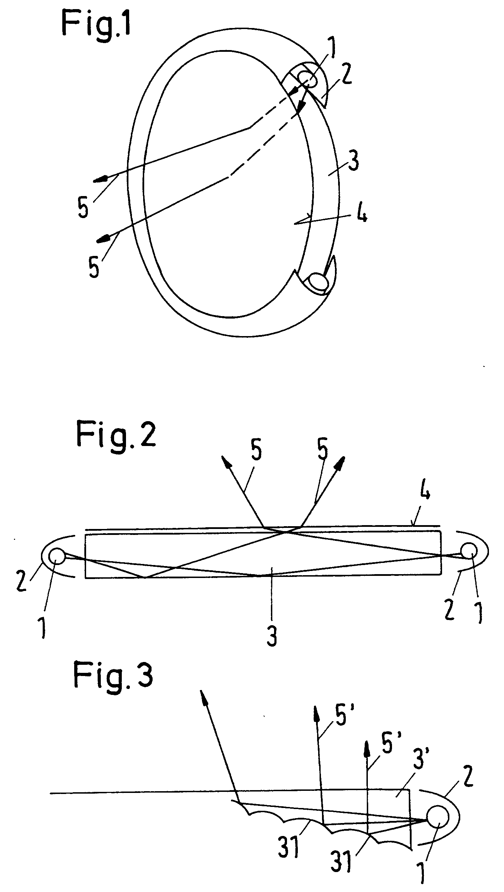

In Figur 1 ist in einer dreidimensionalen Darstellung sowie in Figur 2 in einem Querschnitt eine erste Ausführungsform einer erfindungsgemäßen optischen Anzeigevorrichtung schematisch dargestellt. Als Lichtquelle wird dabei eine Ringlampe 1 verwendet, der ein rinnenförmig um ihre Außenfläche gelegter Reflektor 2 zugeordnet ist. Die optische Anzeigevorrichtung besitzt als Abstrahlelement eine scheibenförmige Lichtleiterplatte 3, deren schmalseitige Umfangsfläche der Ringlampe 1 und dem Reflektor 2 zugekehrt ist. Auf der Lichtaustrittsseite der Lichtleiterplatte 3 ist eine dünne Folie 4 mit einer aus Mikroprismen gebildeten Struktur als lichtauskoppelndes Element aufgebracht. Dabei ist die Struktur der Mikroprismen dieser Folie, im folgenden als Prismenfolie 4 bezeichnet - je nach Anwendungsfall - derart gewählt, daß die optische Anzeigevorrichtung eine definierte Lichtstärkeverteilungscharakteristik besitzt. Eine derartige Prismenfolie ist in dem einleitend gewürdigten Dokument US-A-5 396 350 im einzelnen beschrieben und damit dem Fachmann bekannt. Deshalb ist hier eine ins einzelne gehende Beschreibung nicht erforderlich.

Die lichttechnische Funktion dieser in den Figuren 1 und 2 dargestellten optischen Anzeigevorrichtung ist am deutlichsten der Querschnittdarstellung von Figur 2 zu entnehmen. Das von der Ringlampe 1 in Verbindung mit dem sie umgebenden Reflektor 2 in Richtung der schmalseitigen Umfangsfläche der Lichtleiterplatte 3 abgestrahlte Licht wird in diese eingekoppelt, wie beispielhaft aus den Strahlengängen von Lichtstrahlen 5 hervorgeht. Dabei ist gezeigt, daß die Lichtstrahlen 5 entsprechend ihren unterschiedlichen Einstrahlungswinkeln an verschiedenen Orten an der Unterseite der Lichtleiterplatte 3 total reflektiert und damit in diese hinein transportiert werden. Nach gegebenenfalls mehrfacher Reflexion fallen die Lichtstrahlen auf die Prismenfolie 4 ein. In dem Bereich der Prismen findet keine Totalreflexion statt; vielmehr tritt das Licht in die Prismen ein. Entsprechend der Struktur der Prismen treten die Lichtstrahlen dann mit einem definierten Ausstrahlungswinkel durch die Lichtaustrittsöffnung der optischen Anzeigevorrichtung aus.

Alternativ zu der Prismenfolie 4 kann als Licht auskoppelndes Element eine formstabile Kunststoffplatte mit einer Prismenstruktur an ihrer Oberfläche verwendet werden, welche auf die Lichtleiterplatte 3 aufgesetzt wird. Die Prismenstruktur dieser Kunststoffplatte kann, wie vorangehend beschrieben, in Form einer Prismenfolie auf die Kunststoffplatte aufgebracht sein. Sie kann jedoch auch direkt durch Formen, Gravieren oder dgl. in die Platte eingebracht sein. Eine Prismenstruktur kann natürlich auch direkt in die Lichtleiterleiterplatte 3 eingebracht sein. In diesem Fall kann die Prismenfolie 4 bzw. die vorangehend genannte formstabile Kunststoffplatte entfallen.

Die bei dieser Ausführungsform zur Lichtauskopplung verwendeten Prismen bewirken zusätzlich zu der Lichtauskopplung aus der Lichtleiterplatte 3 auch eine Begrenzung der Lichtabstrahlung auf einen Winkelbereich in einer Ebene senkrecht zu dieser Platte 3. Bei geeigneter Gestaltung der Prismen kann auf diese Weise eine Abschirmung außerhalb dieses Winkelbereichs erreicht werden, derart, daß die Lichtstärkeverteilungskurve außerhalb dieses Winkelbereichs stark abfällt, z.B. unter einen Wert von 1000 cd/m$^2$ oder einen noch geringeren Wert.

Als Prismenstrukturen kommen insbesondere die aus der US-PS 5 396 350 oder US-PS 5 555 109 bekannten Prismenstrukturen in Betracht, mit denen eine Abschirmung in zwei oder mehreren verschiedenen Richtungen erreicht werden kann. Auf die vorangehend genannten US-Patentschriften wird insoweit im Wege der Bezugnahme zur näheren Erläuterung dieser Prismenstrukturen verwiesen. Insbesondere können diese Prismen als Grundstruktur eine Pyramidenform oder eine Pyramidenstumpfform haben.

Der Winkelbereich, in dem eine Abschirmung erfolgt, kann durch eine entsprechende Gestaltung der Prismen, z.B. durch eine geeignete Wahl des Neigungswinkels der Seitenwände zu der Grundfläche der Lichtleiterplatte, verändert werden. Auf diese Weise ist es möglich, die Breite des Winkelbereichs, in den Licht abgestrahlt wird, individuell für die gewünschte Anwendung einzustellen. Die Abschirmung der Lichtauskopplung kann, muß aber nicht, symmetrisch zu einer Normalen zu der Grundfläche der Lichtleiterplatte sein. Durch eine geeignete Wahl der Prismenform ist es möglich, die Hauptabstrahlrichtung in einer Ebene, also die mittlere Richtung, in welche Licht abgestrahlt wird, zu verändern. Hinsichtlich geeigneter Prismenformen wird im Wege der Bezugnahme auf die WO 96/323166 verwiesen, welche beispielhafte Prismenformen und Anordnungen der Prismenstrukturen zeigt und beschreibt, die im Rahmen der vorliegenden Erfindung für eine solche asymmetrische Abstrahlung eingesetzt werden können. Andere Prismenformen, welche zu einer asymmetrischen Lichtauskopplung führen, können natürlich verwendet werden.

Erfindungsgemäß ist es also möglich, durch eine geeignete Wahl der Prismenform sowohl eine bevorzugte Hauptabstrahlrichtung als auch einen Winkelbereich um diese Hauptabstrahlrichtung festzulegen, außerhalb dessen das Licht in dem obengenannten Sinne abgeschirmt wird. Mit anderen Worten ist es möglich, durch die Wahl einer geeigneten Prismenstruktur einen definierten Raumbereich festzulegen, in den hinein Licht ausgekoppelt wird und außerhalb dessen die Lichtstärke des über die Prismenstruktur ausgekoppelten Lichts wesentlich geringer ist. Dementsprechend stellt sich die Lichtaustrittsfläche für einen Betrachter bei verschiedenen Blickrichtungen unterschiedlich dar und er wird insbesondere nur in einem bestimmten Raumbereich einen deutlichen Kontrast zu der Umgebung der Prismenstruktur wahrnehmen und in anderen Raumbereichen nicht, so daß eine bestimmte Information nur in einem bestimmten Raumbereich wahrgenommen werden kann.

Die in Fig. 2 gezeigte Querschnittsform des Reflektors 2 ist nur beispielhaft zu verstehen. Im Beispiel ist ein annähernd parabolischer Reflektorquerschnitt gewählt, so daß das von dem Reflektor 2 abgestrahlte Licht im wesentlichen parallel zur Lichtleiterplatte 3 gerichtet ist und in diese in radialer Richtung eingekoppelt wird. Die Querschnittsform des Reflektors 2 könnte aber auch, bei nur geringfügig größerem Querschnitt, als ein an die Umfangsfläche der Lichtleiterplatte 3 angesetztes Kreissegment ausgebildet sein. In diesem Falle entspräche die Lichtstärkeverteilung an der Umfangsfläche der Lichtleiterplatte 3 lokal einem Lambert'schen Strahler.

Gemäß einer bevorzugten Ausführungsform der Erfindung ist die Prismenstruktur nicht auf der gesamten Oberfläche einer Lichtleiterplatte 3 oder einer Kunststoffplatte 10 vorgesehen, sondern nur auf einem Teil davon, der nachfolgend als „Prismenbereich" bezeichnet wird, wobei die Form des Prismenbereichs auf der Oberfläche so beschaffen ist, daß Licht, das durch die Prismenstruktur ausgekoppelt wird, in einer bestimmten Richtung (und in einem Winkelbereich uni diese Richtung) nur entsprechend einem vorbestimmten geometrischen Muster abgestrahlt wird, welches sich von dem Rest der Lichtaustrittsfläche, auf welchem in diese Richtung kein oder nur weniger Licht ausgekoppelt wird, hell abhebt. Dadurch entfällt die Notwendigkeit von Licht abschirmenden Maßnahmen, z.B. Masken, welchen den Lichtaustritt begrenzen. Vorzugsweise findet nur in dem dem Prismenbereich entsprechenden Teil der Lichtaustrittsfläche eine Lichtauskopplung aus dem Lichtleiter statt. Das besagte Muster nimmt ein Betrachter als eine von der Anzeigevorrichtung vermittelte Information wahr, wobei das Muster sowohl ein Negativ (d. h. der dunkel erscheinende Teil der Oberfläche bildet das Zeichen) als auch ein Positiv (der hell erscheinende Teil bildet das Zeichen) sein kann.

Im einfachsten Fall wird hierfür eine Prismenfolie 4 entsprechend einem vorbestimmten geometrischen Muster ausgeschnitten und auf der Lichtleiterplatte 3 angebracht oder es wird eine Prismenstruktur entsprechend einem vorgegebenen Oberflächenmuster in die Lichtleiterplatte 3 bzw. eine Kunststoffplatte wie vorangehend erwähnt ein- oder aufgebracht.

Die Erfindung eröffnet die Möglichkeit, unterschiedliche Informationen in verschiedene Richtungen abzugeben. Im einfachsten Fall können auf der Oberfläche der Lichtleiterplatte 3 bzw. einer Kunststoffplatte zwei getrennte Prismenbereiche mit verschiedenen Mustern ausgebildet sein, die jeweils Licht in eine andere Vorzugsrichtung auskoppeln. Es ist jedoch auch möglich, eine Prismenstruktur so zu gestalten, daß die in verschiedenen Richtungen wahrgenommenen Muster ganz oder teilweise aus dem gleichen Bereich der Oberfläche zu kommen scheinen. Dies läßt sich beispielsweise dadurch erreichen, daß man keine gleichförmige Prismenstruktur verwendet, sondern eine Prismenstruktur, bei der sich Prismen mit einem unterschiedlichen Abschirmbereich und einer unterschiedlichen Hauptauskoppelrichtung abwechseln, so daß ein Teil der Prismen in einem Prismenbereich in eine erste Richtung und ein anderer Teil der Prismen in eine zweite Richtung Licht auskoppelt.

In Figur 3 ist schematisch dargestellt, daß anstelle der als lichtauskoppelndes Element wirkenden Prismenfolie 4 eine entsprechende Struktur in der Lichtleiterplatte 3' selbst vorgesehen sein kann. Bei der Ausführungsform der Lichtleiterplatte 3' nach Figur 3 besitzt diese auf ihrer der Lichtaustrittsfläche abgewandten Unterseite eine geometrische Struktur, die aus Prismenelementen 31 gebildet ist und die an die Stelle einer planen Unterseite der Lichtleiterplatte 3 gemäß Figur 2 tritt. Figur 3, in der lediglich ein Halbschnitt der Lichtleiterplatte 3' dargestellt ist, zeigt den Strahlenverlauf von entsprechenden Lichtstrahlen 5'. Wenn eine gleichförmige Ausleuchtung der Oberfläche der Lichtleiterplatte beabsichtigt ist, sind die Prismenelemente 31 auf der Lichtleiterplatte 3' vorzugsweise in ihrem Umfang geschlossene ringförmige Strukturen, deren der Lichtquelle 2 zugewandte Fläche jeweils die Reflexionsfläche bildet und entsprechend gestuft angeordnet sowie mit angepaßtem Neigungswinkel ausgebildet ist, um in der Gesamtheit der lichtlenkenden Funktion der Lichtleiterplatte 3 die gewünschte Lichtstärkeverteilung zu erzielen. Bei einer solchen ringförmigen Struktur ergibt sich eine rotationssymmetrische Abstrahlcharakteristik bezüglich der Rotationsachse der Anzeigevorrichtung. Ebenso, wie dies vorangehend für Prismenstrukturen erläutert wurde, die auf der Oberseite der Lichtleiterplatten ausgebildet sind, können die Prismenelemente 31 entsprechend einer geometrischen Struktur angeordnet sein, die ein bestimmtes Musters des austretenden Lichtes festlegt.

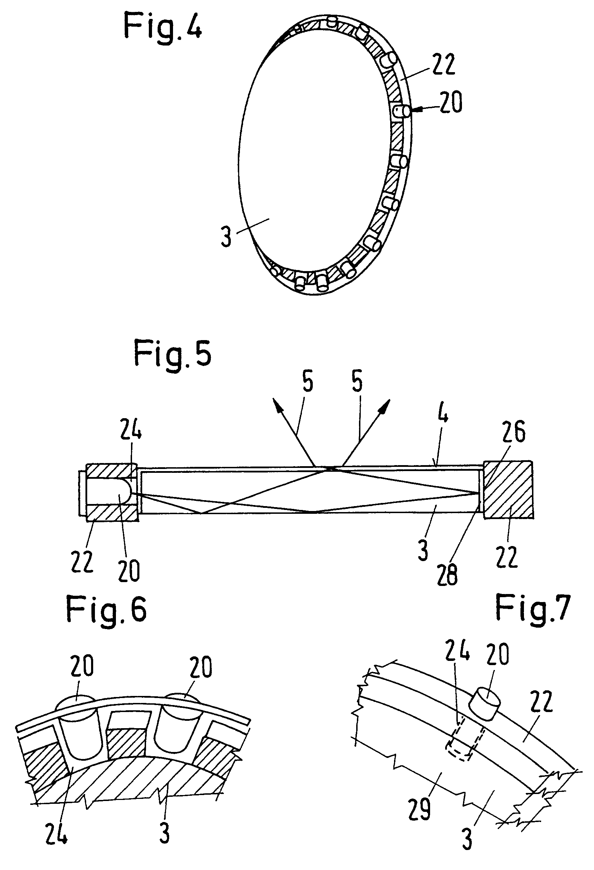

In den Figuren 4 und 5 ist als eine weitere Alternative zu der in den Figuren 1 und 2 dargestellten Ausführungsform der optischen Anzeigevorrichtung eine Weiterbildung dargestellt, bei der anstelle einer Ringlampe 1 als Lichtquelle ein Kranz von Leuchtdioden 20 verwendet wird, der um den Umfang der Lichtleiterplatte 3 herumgelegt ist. Figur 4 zeigt (analog zu Figur 1) diese Ausführungsform schematisch in einer dreidimensionalen Darstellung und Figur 5 illustriert (analog zu Figur 2) einen Querschnitt für diese Ausführung. Als Befestigungselement für die Leuchtdioden 20 dient ein Haltering 22, der aufder schmalseitigen Umfangsfläche der scheibenförmigen Lichtleiterplatte 3 festgelegt ist. Dieser Haltering 22 besitzt eine Vielzahl von radial ausgerichteten Aufnahmebohrungen 24 für jeweils eine der Leuchtdioden 20. Diese Aufnahmebohrungen sind jeweils um einen vorgegebenen Winkel zueinander versetzt angeordnet. In dem Beispiel von Figur 4 bzw. 5 ist jeweils nur eine in einer Ebene liegende Kette von Leuchtdioden 20 vereinfacht dargestellt. Es ist jedoch ohne weiteres einsehbar, daß der Haltering 22 auch derart ausgebildet sein kann, daß er mehrere, im wesentlichen in zueinander parallelen Ebenen angeordnete Ketten von Leuchtdioden 20 aufzunehmen vermag.

Vorteilhaft ist es dabei, wenn die Position der Aufnahmebohrungen 24 im Haltering 22 derart gewählt ist, daß ein in Achsenrichtung der Aufnähmebohrungen 24 gedachter Diagonalstrahl auf der gegenüberliegenden Seite aufvolles Material des Halteringes in einer Lücke zwischen benachbarten Aufnahmebohrungen 24 auftrifft Bei dieser Geometrie der Anordnung für die Aufnahmebohrungen 24 im Haltering 22 läßt sich dann die der Lichtleiterplatte 3 zugekehrte Innenfläche des Halteringes 22 als Reflexionsfläche 26 ausbilden. Alternativ dazu könnte die Lichtleiterplatte 3 selbst eine derartige Reflexionsfläche 28 aufweisen. Diese Maßnahmen begrenzen mögliche Lichtverluste in der Lichtleiterplatte 3. Im übrigen wird zur lichttechnischen Funktion auf die entsprechende Erläuterung des in Figur 2 dargestellten Ausführungsbeispieles verwiesen.

In den Figuren 6 bzw. 7 sind nun zwei Detailansichten für die Ausgestaltung des Halteringes 22 und dessen Anordnung auf der stirnseitigen Umfangsfläche der Lichtleiterplatte 3 dargestellt. Die Anordnung gemäß Figur 6 entspricht der vorstehend insbesondere anhand von Figur 4 beschriebenen Ausgestaltung der Anordnung der Leuchtdioden 20. Dabei sind die vorzugsweise gegurtet angelieferten Leuchtdioden 20 lediglich in die Aufnahmebohrungen 24 des Halteringes eingesteckt und grenzen mit ihren Licht emittierenden Stirnkappen an den Umfang der Lichtleiterplatte 3 an. Im Falle der Anordnung von Figur 7 sind zusätzlich in die schmalseitige Umfangsfläche der Lichtleiterplatte 3, den Aufnahmebohrungen 24 des Halteringes 22 konzentrisch zugeordnet, Sacklochbohrungen 29 vorgesehen Damit ist es möglich, die Leuchtdioden 20 mit ihrer Licht emittierenden Stirnfläche zumindest geringfügig in der Lichtleiterplatte 3 versenkt anzuordnen. Zwar ist es bei dieser Anordnung erforderlich, die Position des Halteringes 22 in bezug auf die schmalseitige Umfangsfläche der Lichtleiterplatte 3 eng toleriert anzuordnen, was bei der Anordnung gemäß Figur 6 nicht erforderlich ist. Dieser zusätzliche fertigungstechnische Aufwand ist aber damit zu rechtfertigen, daß damit die Lichteinkopplung verbessert und insbesondere die stirnseitige Umfangsfläche der Lichtleiterplatte 3 mit der vorstehend erwähnten Reflektorfläche 28 ausgestattet sein kann, was den beschriebenen Vorteil in bezug auf die interne Totalreflexion der Lichtleiterplatte 3 bietet.

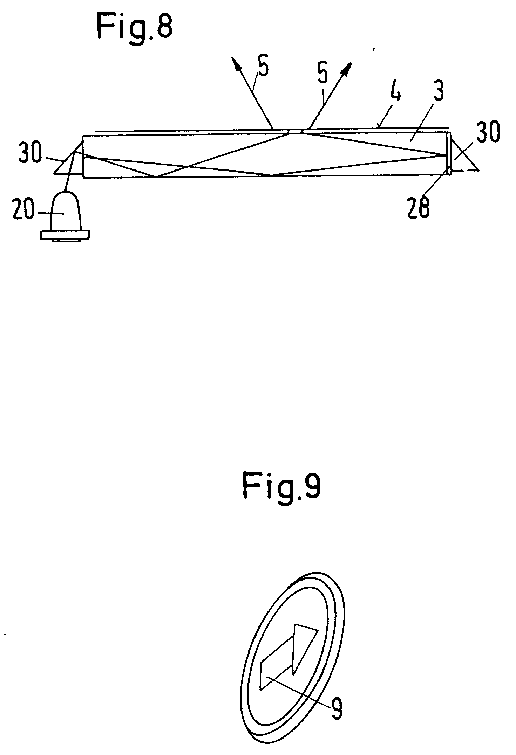

In Figur 8 ist alternativ zu der Anordnung der Leuchtdioden 20 gemäß Figur 3 eine weitere Möglichkeit schematisch dargestellt. Diese Alternative illustriert, daß sich eine seitliche Lichteinkopplung in die Lichtleiterplatte 3 über ihre schmalseitige Umfangsfläche auch dann realisieren läßt, wenn die - bei diesem Beispiel als Leuchtdiode 20 ausgebildete - Lichtquelle mit ihrer Achse nicht parallel zu den Längsseiten der Lichtleiterplatte 3, sondern vertikal dazu angeordnet ist. In diesem Falle ist als Licht einkoppelndes Element auf der schmalseitigen Umfangsfläche der Lichtleiterplatte 3 lediglich ein Prismenring 30 vorzusehen, über den das von den Leuchtdioden 20 emittierte Licht - wie bei den vorstehend beschriebenen Ausführungsformen - seitlich in die Lichtleiterplatte 3 eingekoppelt wird. Auch dieses Beispiel belegt, daß eine Mehrzahl von konstruktiven Lösungen möglich ist, uni verlustarm von einer Lichtquelle, beispielsweise einer Anordnung von Leuchtdioden 20, emittiertes Licht seitlich in die Lichtleiterplatte 3 einzukoppeln.

In Figur 9 ist schließlich ein Beispiel dafür angegeben, daß die vorstehend beschriebenen Ausführungsformen für eine optische Anzeigevorrichtung - ähnlich wie bei konventionellen Lösungen - so ausgestaltet sein können, daß in der Lichtaustrittsfläche der optischen Anzeigevorrichtung ein visuell wahrnehmbares Kontrastmuster 9 entsteht, das in diesem Fall beispielhaft als ein Pfeil wiedergegeben ist. Für die Realisierung eines solchen Musters sind eine Reihe von Möglichkeiten z. B. durch Einätzen, Bedrucken des Abstrahlelementes oder durch Einlegen von Filterfolien und dergleichen bekannt. Kontrastmuster dieser Art können insbesondere ein durch die Prismenstruktur festgelegtes Muster weiter strukturieren oder anderweitig fortbilden. Beispielsweise können durch Filterfolien in dem durch die Prismen festgelegten Muster eine bestimmte Farbgebung oder Helligkeitsabstufungen erzeugt oder das Muster in Bereiche mit unterschiedlicher Farbe oder Helligkeit unterteilt werden.

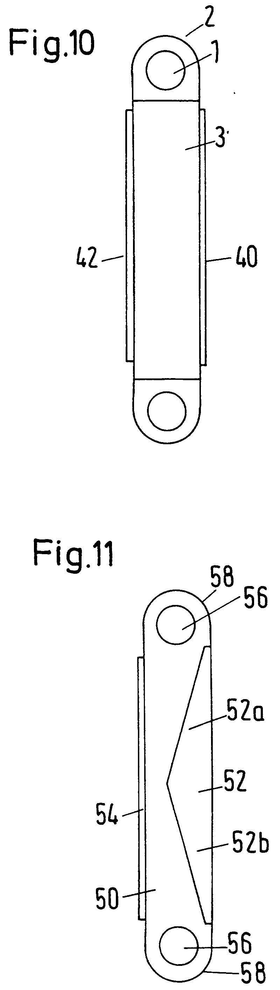

Fig. 10 zeigt eine Abwandlung der Ausführungsform gemäß Fig. 1, bei der auf den beiden gegenüberliegenden Seiten der Lichtleiterplatte 3 unterschiedliche Informationen abgegeben werden. Gleiche Bestandteile wie in Fig. 1 sind mit den gleichen Bezugszeichen versehen und werden nicht näher erläutert. Auf einer ersten Seite der Lichtleiterplatte 3 ist eine Prismenfolie 40 und auf der gegenüberliegenden Seite eine Prismenfolie 42 angebracht, so daß auf beiden Seiten Licht über die Prismenfolien 40 bzw. 42 ausgekoppelt wird. Die beiden Prismenfolien 40 und 42 können identisch ausgebildet sein, so daß eine Lichtauskopplung in die (bezüglich der jeweiligen Lichtaustrittsfläche) gleiche Richtung mit der gleichen Abstrahlcharakteristik auf beiden Seiten erfolgt. Ebenso kann die dargestellte Information dieselbe sein. Die auf den beiden Seiten vorgesehenen Mittel zum Erzeugen eines Kontrastmusters können dann identisch ausgebildet sein. Diese Mittel können, wie vorangehend erläutert, konventionelle Mittel, d.h. eine Folie, eine Beschichtung, eine Ätzung, ein bedruckter Bereich oder dgl. sein. Insbesondere kann aber die Geometrie der angezeigten Information durch die Form der Folien 40 und 42 festgelegt oder mitbestimmt sein, die beispielsweise entsprechend dem gleichen Muster ausgeschnitten sein können und dementsprechend nur in einem Bereich, der diesem Muster entspricht, Licht auskoppeln. Die beiden Prismenfolien bzw. die angezeigte Information können jedoch auf beiden Seiten auch verschieden sein. Insbesondere kann vorgesehen sein, daß die Prismenfolien 40 und 42 den Hauptanteil des über sie ausgekoppelten Lichts in verschiedene Richtungen, bezogen aufeine Senkrechte zurjeweiligen Lichtaustrittsfläche, auskoppeln, so daß ein Betrachter die angezeigte Information auf den beiden Seiten unter verschiedenen Winkeln relativ zu der Anzeigevorrichtung sieht. Statt einer Prismenfolie 40 bzw. 42 kann auch eine Prismenplatte verwendet werden.

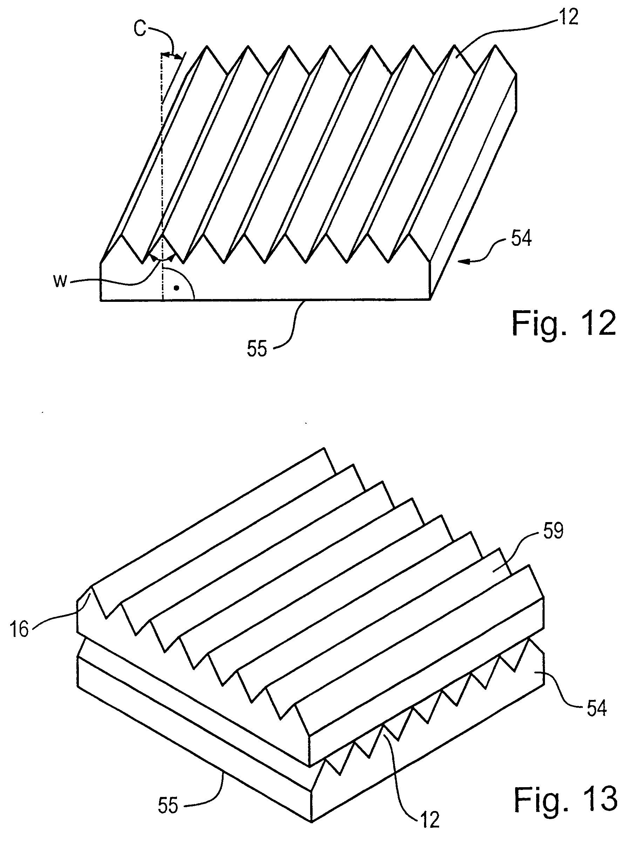

Während vorangehend als Lichtleiter ein Vollichtleiter beschrieben wurde, läßt sich die Erfindung auch mit einem Hohllichtleiter realisieren. Eine solche Ausführungsform ist beispielhaft in Fig. 11 dargestellt. Ein - in diesem Beispiel rechteckiger - Hohllichtleiter 50 ist an zwei einander gegenüberliegenden Schmalseiten durch reflektierende Wände (nicht dargestellt) begrenzt und auf den beiden anderen Schmalseiten offen. Auf seiner Rückseite wird er durch eine reflektierende Wand 52 begrenzt, welche aus zwei zueinander in einem stumpfen Winkel geneigten geraden Wandabschnitten 52a und 52b besteht und die Licht zu der gegenüberliegenden Seite des Hohllichtleiters reflektiert. Auf der der Rückwand 52 gegenüberliegenden Seite ist der Hohllichtleiter durch eine Prismenplatte 54 begrenzt, welche auf einer oder beiden Oberflächen eine Prismenstruktur aufweist. Auf den beiden offenen Schmalseiten des Hohllichtleiters 50 sind jeweils Lampen 56 mit einem zugeordneten Reflektor 58 vorgesehen, welche Licht in den Hohllichtleiter einkoppeln.

Eine beispielhafte Prismenstruktur einer Prismenplatte 54 ist in Fig. 12 dargestellt. Die Prismenplatte 54 ist in diesem Beispiel eine formstabile Kunststoffplatte, in welche längliche linienförmige Prismen 12 mit einem dreieckigen Querschnitt z.B. durch Formen, Gravieren oder dgl. eingebracht sind. Die Prismen 12 weisen an ihrer Spitze einen Prismenwinkel w auf In diesem Zusammenhang können insbesondere Prismenstrukturen verwendet werden, bei denen die Breite der Prismen kleiner, insbesondere deutlich kleiner als ihre Länge, ist. Gemäß einer möglichen Ausführungsform besteht die Prismenstruktur aus einem Muster von geraden, parallelen, kreuzungsfreien Linien, zwischen denen sich Prismen als lichtbrechende Abschnitte befinden, die eine längliche Form haben und deren Querschnittsprofil im wesentlichen translationsinvariant bezüglich der Richtung der Linien ist. Der Querschnitt der Prismen hat gemäß einer besonderen Ausführungsform die Form eines Polygonzugs. Vorzugsweise haben die Prismen einen dreieckigen Querschnitt. Sie könnten jedoch auch gekrümmte Seitenwände und/oder eine flache Stirnfläche anstelle einer scharfen Kante aufweisen. Die Prismenstruktur kann auch in Form einer Folie, wie vorangehend beschrieben, auf eine Trägeplatte aufgebracht sein.

Die Prismen 12 bewirken eine Begrenzung der Lichtabstrahlung auf einen Winkelbereich bezüglich einer Normalen zu der Grundfläche 55 der Platte 54 in einer Ebene senkrecht zur Längsrichtung, der durch einen Abschirmwinkel C festgelegt ist und in welchen der Hauptteil des ausgekoppelten Lichts abgestrahlt wird. Zwischen dem Prismenwinkel w und dem Abschirmwinkel C gelten die folgenden Relationen:

$$w/2 < C$$

$$w > 2 \, (2 \arcsin(1/n)+90) \, /3$$

$$\tan(w/2) < (n \sin(\arcsin(1/n) - 3 \, w/2) + \cos(w/2))/(n \cos(\arcsin(1/n) - 3 \, w/2) - \sin(w/2))),$$

wobei n der Brechungsindex des Materials der Platte 54 ist. Die in Fig. 12 gezeigte Prismenstruktur bewirkt also, daß in einer Ebene senkrecht zu der Längsrichtung der Prismen die Lichtabstrahlung derart begrenzt wird, daß der Hauptanteil des Lichts in den durch den Winkel C festgelegten Bereich abgestrahlt wird, während in einer Ebene parallel zu der Längsrichtung der Prismen im wesentlichen eine geringere Abschirmung oder nur eine Abschirmung bei wesentlichen größeren Winkeln erfolgt.

Es ist ersichtlich, daß die Richtungen, in denen eine Abschirmung erfolgt, durch eine entsprechende Gestaltung der Prismen verändert werden kann. Beispielsweise können die Prismen entsprechend einem Muster von gekrümmten Linien aufgebaut sein, wobei in diesem Fall eine Abschirmung in (nicht notwendig ebenen) Flächen senkrecht zu den Linien der Struktur erfolgt und in Flächen parallel zu den Linien keine Abschirmung oder eine Abschirmung bei einem größeren Winkel erfolgt. Beispielsweise könnten die Prismen auch kreisförmig oder spiralförmig sein.

Wenn eine Abschirmung in verschiedenen Richtungen erwünscht ist, können zwei derartige Prismenplatten so angeordnet sein, daß die Linien der Struktur der ersten Platte sich in einer Projektion auf die zweite Platte mit den Linien der Struktur der zweiten Platte kreuzen und in der Projektion ein netzförmiges Muster entsteht. Dies ist schematisch in Fig. 13 dargestellt, welche übereinandergelegte Prismenplatten 54 und 59 mit jeweiligen geraden Prismen 12 und 16 mit einem dreieckigen Querschnitt zeigt.

Selbstverständlich können auch mehr als zwei derart geschichtete Platten mit lichtbrechenden Strukturen vorgesehen sein. Die beiden Prismenstrukturen (12, 16) können auch auf gegenüberliegenden Seiten einer einzigen Platte vorgesehen sein.

Die in Fig. 12 und 13 gezeigte Prismenstruktur mit einem dreieckigen Querschnitt ist lediglich beispielhaft. Andere Querschnittsformen können ebenfalls bei linienförmigen Prismen verwendet werden, wobei diese bevorzugt so ausgebildet sind, daß sich eine Abschirmung in der Richtung quer zu den Linien der Prismenstruktur ergibt.

Grundsätzlich kann eine Abschirmung in zwei oder mehreren verschiedenen Richtungen auch bei einem Hohllichtleiter durch die Verwendung von dreidimensionalen Prismenstrukturen in oder an einer Platte erreicht werden, wie sie beispielsweise aus den bereits erwähnten Druckschriften US-PS 5 396 350 oder der US-PS 5 555 109 bekannt sind, auf die insoweit wieder im Wege der Bezugnahme verwiesen wird.

Während bei dem vorangehend mit Bezug auf Fig. 12 und 13 beschriebenen Ausführungsbeispiel die Abschirmung in einer Ebene symmetrisch zu einer Normalen zu der Grundfläche 55 der Prismenplatte 54 war, kann der Bereich, in den der Hauptanteil des ausgekoppelten Lichts abgestrahlt wird, auch unsymmetrisch zu einer solchen Normalen sein. Im einfachsten Fall läßt sich dies dadurch erreichen, daß die Basis der in Fig. 12 und 13 gezeigten dreieckigen Prismen jeweils zu der Grundfläche der Prismenplatte 54 selbst zu der reflektierenden Wand 52 geneigt ist. Die Prismen können jedoch auch asymmetrisch ausgebildet sein.

Insgesamt kann also auch bei einem Hohllichtleiter durch eine geeignete Wahl des Abschirmwinkels C erreicht werden, daß das ausgekoppelte Licht und damit die angezeigte Information nur in einem begrenzten Winkelbereich um eine vorgegebene Richtung sichtbar ist, welche senkrecht zu der Grundfläche der Prismenplatte sein kann, aber auch, z. B. bei der Verwendung von asymmetrischen Prismen, wie vorangehend beschrieben, zu dieser Grundfläche in einem Winkel von weniger als 90° geneigt sein kann.

Die Wirkungsweise der in Fig. 11 dargestellten Ausführungsform entspricht der schematisch in Fig. 2 dargestellten Wirkungsweise. Von den Lampen 56 in den Hohllichtleiter 50 eingestrahltes Licht fällt zu einem Teil auf die Prismenplatte 54 ein, die selektiv Licht in eine bestimmte Hauptabstrahlrichtung mit einem bestimmten Abschirmbereich auskoppelt und das restliche Licht in den Hohllichtleiter 50 zurückreflektiert. Ein weiterer Teil des Lichts fällt auf die reflektierende Dachfläche 52 ein, die es im wesentlichen zu der Prismenplatte 54 reflektiert. Ebenso wird das von der Prismenplatte 54 reflektierte, in dem Hohllichtleiter 50 laufende Licht von der Dachfläche 52 zu der Prismenplatte 54 zurückreflektiert. Im Ergebnis ergibt sich also wieder eine selektive Lichtauskopplung im Bereich der Prismenstruktur auf der Prismenplatte 54, wobei diese Prismenstruktur, wie vorangehend erläutert, nur auf einem Teilbereich der Platte ausgebildet sein kann, um ein visuelles Muster zu erzeugen. Es hat sich gezeigt, daß eine konkave Ausbildung der reflektierenden Rückwand 52, beispielsweise in der Form von zwei aneinander angrenzenden Schrägflächen, wie in Fig. 11 gezeigt, zu einer gleichmäßigen Lichtstärkeverteilung über der Platte 54 führt und die Lichtstärke des ausgekoppelten Lichts in einem Bereich um die Normale zu der Prismenplatte 54 in einer Schnittebene senkrecht zu dieser Prismenplatte vergrößert. Die Rückwand 52 könnte jedoch auch gerade ausgebildet sein. Letzteres kann von Vorteil sein, wenn eine asymmetrische Abstrahlung erwünscht ist und eine hohe Lichtstärke in der Richtung der Normalen zu der Prismenplatte 54 nicht erforderlich ist.

Der Hohllichtleiter 50 ist nicht auf eine rechteckige Form beschränkt und kann insbesondere, wie der Volllichtleiter bei dem Ausführungsbeispiel der Fig. 1, rotationssymmetrisch ausgebildet sein. In diesem Fall weist er, wie die Lichtleiterplatte 3 bei dem Ausführungsbeispiel der Fig. 1, eine einzige äußere Schmalseite auf, über welche von einer Ringlampe Licht eingekoppelt wird. Während die Schmalseite, über die Licht eingekoppelt wird, bei dem vorangehend beschriebenen Ausführungsbeispiel offen war, kann diese auch durch ein Lichteinkoppelfenster oder, bei einer versetzten Anordnung der Lichtquelle, durch ein Umlenkprisma, ähnlich wie in Fig. 8 gezeigt, verschlossen sein.

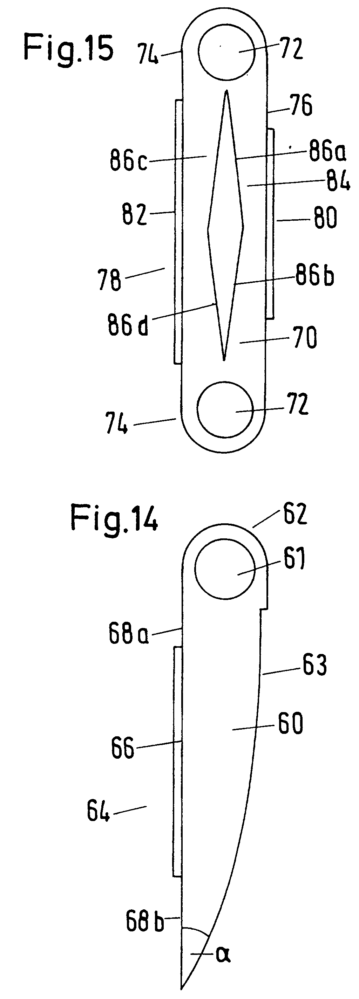

Fig. 14 zeigt eine einlampige Ausführungsform einer Anzeigevorrichtung mit einem Hohllichtleiter 60. In den Hohllichtleiter 60 wird von einer Schmalseite, oder, allgemeiner ausgesprochen, nur über einen Teil seines Umfangs, von einer Lampe 61 mit einem zugeordneten Reflektor 62 Licht eingekoppelt. Der Hohllichtleiter 60 ist in diesem Fall auf einer Seite durch eine konvex gekrümmte reflektierende Wand 63 begrenzt, die in einem spitzen Winkel α an die ihr gegenüberliegende Begrenzungswand anschließt. Diese Begrenzungswand besteht aus einer Platte 64, die in einem Teilbereich 66 eine Prismenstruktur wie vorangehend beschrieben aufweist, welche Licht entsprechend einem vorgegebenen geometrischen Muster auskoppelt, das einem von einem Betrachter wahrzunehmenden Zeichen entspricht, und weiterhin Bereiche 68a und 68b besitzt, die keine Prismenstrukturen aufweisen. In diesen Bereichen ist die Platte, die insgesamt aus einem transparenten Material besteht, nicht strukturiert, so daß das auf diese Bereiche einfallende Licht mehrheitlich in den Hohllichtleiter 60 zurückreflektiert wird und allenfalls ein geringer Lichtanteil ausgekoppelt wird. Diese Bereiche 68a und 68b erscheinen daher für einen Betrachter dunkel oder schwach diffus strahlend, während der Bereich der Prismenstruktur 66 hell erscheint. Die Bereiche 68a und 68b können zu der Innenseite hin verspiegelt sein, um den Kontrast zu verstärken.

Die Geometrie der Fig. 14 kann auch mit einem Vollichtleiter realisiert werden, der entsprechend der Geometrie des Hohllichtleiters 60 ausgebildet ist. In diesem Fall ist nur in dem Bereich 66 eine Prismenfolie oder eine Platte mit einer Prismenstruktur auf den Lichtleiter aufgebracht bzw. der Lichtleiter mit einer unmittelbar eingebrachten Prismenstruktur zur Lichtauskopplung versehen.

Fig. 15 zeigt, wie mit einem Hohllichtleiter eine Abgabe von Informationen auf zwei verschiedenen Seiten erreicht werden kann. Der Hohllichtleiter 70, in den an den offenen Schmalseiten wieder von Lampen 72 mit zugeordneten Reflektoren 74 Licht eingekoppelt wird, ist aufder Vorder- und Rückseite jeweils durch eine transparente Platte 76 bzw. 78 begrenzt, die selektiv mit einer Prismenstruktur 80 bzw. 82 versehen ist, welche die Geometrie des visuell wahrnehmbaren Musters der angezeigten Information festlegt. In Fig. 15 ist angedeutet, daß diese Prismenstrukturen 80 und 82 unterschiedlich sind, so daß auf den beiden Seiten verschiedene Informationen angezeigt werden. Die Information kann natürlich auch die gleiche sein. Zwischen den beiden Platten 76 und 78 ist ein Reflektor 84 vorgesehen, der aus Reflektorflächen 86a bis 86d besteht, die in einer annäherungsweisen Rautenform angeordnet sind. Genauer stehen die Reflektorflächen 86a und 86b der Platte 76 gegenüber und schließen zwischen sich einen stumpfen Winkel ein. Ebenso stehen die Reflektorflächen 86c und 86d der Plane 78 gegenüber und schließen einen stumpfen Winkel zwischen sich ein. Lichttechnisch entsprechen die Reflektorflächen 86a und 86b bzw. 86c und 86d den Reflektorflächen 52a und 52b der Ausführungsform der Fig. 11. Die Reflektorflächen 86a und 86c bzw. 86b und 86d schließen in einem spitzen Winkel aneinander an, so daß das in den Lichtleiter eingekoppelte Licht der Lampen 72 auf den Raumbereich zwischen den Reflektorflächen 86a und 86b und der Platte 76 einerseits und dem Raumbereich zwischen den Reflektorflächen 86c und 86d und der Platte 78 andererseits aufgeteilt wird. Die Ausführungsform gemäß Fig. 15 dupliziert also gewissermaßen die Ausführungsform gemäß Fig. 11. Die dargestellte Form des Reflektors 84 ist lediglich beispielhaft. Er könnte beispielsweise auch aus einer einfachen Platte mit zwei einander gegenüberliegenden reflektierenden Rundflächen bestehen, welche den Planen 76 und 78 jeweils gegenüberstehen.

Bezug nehmend auf die Ausführungsformen gemäß Fig. 11 bis 15 insgesamt können die reflektierenden Wände sowohl hochglänzend als auch diffus reflektierend ausgebildet sein oder auch sowohl hochglänzende als auch diffus reflektierende Bereiche und/oder lichtabsorbierende Bereiche aufweisen. Insbesondere bei dem Ausführungsbeispiel der Fig. 11 kann die Dachwand 52 auch teilweise lichtdurchlässig sein. Dies bildet eine alternative Möglichkeit, auf der zweiten Seite der Anzeigevorrichtung ebenfalls eine Information anzuzeigen, welche durch die Geometrie der lichtdurchlässigen Bereiche der Rückwand 52 festgelegt ist.

Zahlreiche Abwandlungen der vorangehend beschriebenen Ausführugsform sind im Rahmen der Erfindung möglich. Insbesondere sind die für Hohllichtleiter bzw. Vollichtleiter in den Ausführungsformen dargestellten und beschriebenen Prismenformen lediglich beispielhaft und auch nicht auf die jeweilige Verwendung bei einem Vollichtleiter oder einem Hohllichtleiter beschränkt. Grundsätzlich können Prismenformen, wie sie in Verbindung mit einem Hohllichtleiter, insbesondere mit Bezug auf Fig. 12 und 13 beschrieben wurden, auch zur Lichtauskopplung aus einem Vollichtleiter verwendet werden. Umgekehrt sind auch Prismenformen, die im Zusammenhang mit Vollichtleiter erwähnt wurden, bei einem Hohllichtleiter anwendbar.

Die in der vorangehenden Beschreibung, den Ansprüchen und den Zeichnungen offenbarten Merkmale der Erfindung können sowohl einzeln als auch in beliebiger Kombination für die Verwirklichung der Erfindung in ihren verschiedenen Ausführungsformen wesentlich sein.

Bezugszeichenliste

| | |
|---|---|
| 1 | Ringlampe |
| 2 | Reflektor |
| 3 | Lichtleiterplatte |
| 3' | Lichtleiterplatte |
| 4 | Folie |
| 5 | Lichtstrahl |
| 5' | Lichtstrahl |
| 9 | Kontrastmuster |
| 12 | Prismen |
| 16 | Prismen |
| 20 | Leuchtdiode |
| 22 | Haltering |
| 24 | Aufnahmebohrung |
| 26 | Reflexionsfläche |
| 28 | Reflexionsfläche |
| 29 | Sacklochbohrung |
| 30 | Prismenring |
| 31 | Prismenelement |
| 40 | Prismenfolie |
| 42 | Prismenfolie |
| 50 | Hohllichtleiter |
| 52 | reflektierende Rückwand |
| 52a, 52b | Wandabschnitt |
| 54 | Prismenplatte |
| 55 | Grundfläche der Prismenplatte |
| 56 | Lampe |
| 58 | Reflektor |
| 59 | Prismenplatte |
| 60 | Hohllichtleiter |
| 61 | Lampe |
| 62 | Reflektor |
| 63 | reflektierende Wand |
| 64 | Platte |
| 66 | Prismenbereich |
| 68a, 68b | prismenfreie Bereiche |
| 70 | Hohllichtleiter |
| 72 | Lampe |
| 74 | Reflektor |
| 76 | transparente Platte |
| 78 | transparente Platte |
| 80 | Prismenstruktur |
| 82 | Prismenstruktur |
| 84 | Reflektor |
| 86a, 86b, 86c, 86d | Reflektorfläche |
| C | Abschirmwinkel |
| w | Prismenwinkel |
| $\alpha$ | Winkel |

**Patentansprüche**

1. Optische Anzeigevorrichtung mit einer Lichtquelle (1; 20; 56; 61; 72), deren abgestrahltes Licht in einer Lichtaustrittsfläche der Anzeigevorrichtung über ein optisch wirksames Abstrahlelement (3, 3'; 50; 60; 70) gerichtet austritt, **dadurch gekennzeichnet**, daß das Abstrahlelement als Lichtleiter (3; 3'; 50; 60; 70) ausgebildet ist, wobei das von der Lichtquelle (1; 20; 56; 61; 72) abgegebene Licht in den Lichtleiter von seiner Schmalseite her eingekoppelt wird und daß Mittel zum Auskoppeln (4; 10; 14; 31; 40, 42; 54; 64; 76, 78) des in dem Lichtleiter transportierten Lichtes durch die Lichtaustrittsfläche hindurch mit einer Prismenstruktur (12, 16; 31; 66; 80, 82) vorgesehen sind, wobei die Prismenstruktur einen vorbestimmten Teil der Lichtaustrittsfläche festlegt, über den Licht aus dem Lichtleiter ausgekoppelt wird.

2. Optische Anzeigevorrichtung nach Anspruch 1, **dadurch gekennzeichnet**, daß die Mittel zum Auskoppeln des Lichtes eine geometrische Struktur von prismatischen reflektierenden Elementen (31) umfassen, die in der von der Lichtaustrittsfläche abgekehrten Oberfläche des Lichtleiters vorgesehen sind.

3. Optische Anzeigevorrichtung nach Anspruch 1, **dadurch gekennzeichnet**, daß die Mittel zum Auskoppeln des Lichtes eine aufder Seite der Lichtaustrittsfläche des Lichtleiters ausgebildete Prismenstruktur (12, 16; 66; 80, 82) umfassen.

4. Optische Anzeigevorrichtung nach einem der Ansprüche 1 bis 3, **dadurch gekennzeichnet**, daß an einer Schmalseite des Lichtleiters ein Umlenkprisma (30) mit einer dem Lichtleiter (3) zugewandten Lichtabgabefläche und einer Lichteintrittsfläche vorgesehen ist und die Lichtquelle (20) 50 angeordnet ist, daß von ihr abgestrahltes Licht auf die Lichteintrittsfläche des Prismas fällt, wobei das Prisma das auf seine Lichteintrittsfläche einfallende Licht der Lichtquelle (20) zu der Lichtabgabefläche des Prismas hin umlenkt und damit in den Lichtleiter (3) einkoppelt.

5. Optische Anzeigevorrichtung nach einem der Ansprüche 1 bis 4, dadurch gekennzeichnet, daß die Lichtquelle aus einer Mehrzahl von Leuchtdioden (20) besteht, die vorzugsweise entlang dem gesamten Umfang des Lichtleiters (3) vorgesehen sind und jeweils einer schmalseitigen Umfangsfläche zugekehrt angeordnet sind.

6. Optische Anzeigevorrichtung nach Anspruch 5, **dadurch gekennzeichnet**, daß die Anordnung von Leuchtdioden (20) in einer Aufeinanderfolge aus Leuchtdioden unterschiedlichen Typs mit jeweils charakteristischer Lichtfarbe besteht, wobei die Leuchtdioden jedes Typs individuell aktivierbar sind.

7. Optische Anzeigevorrichtung nach einem der Ansprüche 1 bis 5, dadurch gekennzeichnet, daß der Lichtleiter zumindest zwei Lichtaustrittsflächen aufweist, die jeweils mit einer Prismenstruktur (40, 42) zum Auskoppeln des Lichts aus dem Lichtleiter versehen sind.

8. Optische Anzeigevorrichtung nach Anspruch 7, dadurch gekennzeichnet, daß der Lichtleiter ein Hohllichtleiter (70) ist und in dem Bereich zwischen den Lichtaustrittsflächen in dem Hohlraum des Hohllichtleiters ein Reflektor (84) mit zwei einander gegenüberliegenden Seiten (86a, 86b; 86c, 86d) angeordnet ist, wobei die eine dieser Seiten (86a, 86b) auf sie einfallendes Licht zu einer der beiden Lichtaustrittsflächen (76) reflektiert und die andere der reflektierenden Seiten (86c, 86d) des Reflektors das auf sie einfallende Licht zu der anderen Lichtaustrittsfläche (78) reflektiert.

9. Optische Anzeigevorrichtung nach einem der Ansprüche 1 bis 8, dadurch gekennzeichnet, daß die Prismenstruktur an einer Lichtaustrittsfläche eine erste Gruppe von Prismen umfaßt, welche Licht in einen ersten Raumbereich auskoppelt, und zumindest eine zweite Gruppe von Prismen aufweist, welche Licht in einen zweiten Raumbereich auskoppeln, der mit dem ersten Raumbereich nicht identisch ist.

Fig.1

Fig.2

Fig.3

Fig.4

Fig.5

Fig.6

Fig.7

## Fig.8

## Fig.9

Fig.10

Fig.11

Fig. 12

Fig. 13

Fig.15

Fig.14

Europäisches
Patentamt

**EUROPÄISCHER RECHERCHENBERICHT**

Nummer der Anmeldung

EP 99 11 5695

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | EP 0 846 915 A (SIEMENS BELEUCHTUNGSTECHNIK) 10. Juni 1998 (1998-06-10) | 1 | F21V8/00 F21V5/02 |
| Y | * Zusammenfassung; Abbildung 2 * | 2,3,5-7, 9 | |
| Y | EP 0 780 265 A (REITTER&SCHEFENACKER) 25. Juni 1997 (1997-06-25) * Spalte 3; Abbildung 3 * | 2,3 | |
| Y | EP 0 751 340 A (LUMITEX) 2. Januar 1997 (1997-01-02) * Spalte 4 - Spalte 5; Abbildung 7 * | 5,6 | |
| Y | EP 0 533 301 A (WILLING) 24. März 1993 (1993-03-24) * Spalte 8; Abbildungen 6,7,9 * | 7 | |
| Y | EP 0 819 970 A (NITTO JUSHI KOGYO) 21. Januar 1998 (1998-01-21) * Zusammenfassung; Abbildung 4 * | 9 | |
| | | | RECHERCHIERTE SACHGEBIETE (Int.Cl.7) |
| P,X | EP 0 881 427 A (THOMSON MULTIMEDIA) 2. Dezember 1998 (1998-12-02) * Ansprüche 1-4; Abbildungen 1,2 * | 1 | F21V |

Der vorliegende Recherchenbericht wurde für alle Patentansprüche erstellt

| Recherchenort | Abschlußdatum der Recherche | Prüfer |
|---|---|---|
| DEN HAAG | 8. Oktober 1999 | Malic, K |

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 99 11 5695

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

08-10-1999

| Im Recherchenbericht angeführtes Patentdokument | | Datum der Veröffentlichung | Mitglied(er) der Patentfamilie | | Datum der Veröffentlichung |
|---|---|---|---|---|---|
| EP 0846915 | A | 10-06-1998 | KEINE | | |
| EP 0780265 | A | 25-06-1997 | DE | 19547861 A | 26-06-1997 |
| | | | US | 5707130 A | 13-01-1998 |
| EP 0751340 | A | 02-01-1997 | US | 5613751 A | 25-03-1997 |
| | | | JP | 9021916 A | 21-01-1997 |
| | | | US | 5618096 A | 08-04-1997 |
| | | | US | 5921652 A | 13-07-1999 |
| | | | US | 5876107 A | 02-03-1999 |
| EP 0533301 | A | 24-03-1993 | DE | 4129266 A | 04-03-1993 |
| | | | DE | 4205136 A | 26-08-1993 |
| | | | DE | 4217798 A | 02-12-1993 |
| | | | DE | 4219294 A | 16-12-1993 |
| | | | DE | 9113944 U | 23-01-1992 |
| | | | DE | 9219085 U | 16-10-1997 |
| | | | DE | 9218854 U | 12-10-1995 |
| EP 0819970 | A | 21-01-1998 | US | 5914759 A | 22-06-1999 |
| | | | WO | 9729398 A | 14-08-1997 |
| EP 0881427 | A | 02-12-1998 | FR | 2764086 A | 04-12-1998 |
| | | | JP | 10339874 A | 22-12-1998 |

EPO FORM P0461

Für nähere Einzelheiten zu diesem Anhang : siehe Amtsblatt des Europäischen Patentamts, Nr. 12/82